Europäisches Patentamt

European Patent Office

Office européen des brevets

(11) Publication number: **0 168 173**
**B1**

# EUROPEAN PATENT SPECIFICATION

(45) Date of publication of patent specification: **18.01.89**

(21) Application number: **85304087.1**

(22) Date of filing: **10.06.85**

(51) Int. Cl.⁴: **C 08 G 18/81, C 08 G 18/67, C 08 G 18/48, C 08 G 18/75, C 08 G 18/73, C 09 D 3/72**

(54) Radiation curable acrylated polyurethane oligomer compositions.

(30) Priority: **11.06.84 US 619100**

(43) Date of publication of application:
**15.01.86 Bulletin 86/03**

(45) Publication of the grant of the patent:
**18.01.89 Bulletin 89/03**

(84) Designated Contracting States:
**BE CH DE FR GB IT LI NL SE**

(56) References cited:
**DE-A-2 312 973**
**FR-A-1 495 558**
**US-A-4 131 602**
**US-A-4 415 604**

(73) Proprietor: **INTEREZ, Inc. (a Georgia corporation)**
**10100 Linn Station Road**
**Louisville, Kentucky 40233 (US)**

(72) Inventor: **Morris, William Jerry**
**8516 Bronzewing Court**
**Jeffersontown Kentucky (US)**

(74) Representative: **De Minvielle-Devaux, Ian Benedict Peter et al**
**CARPMAELS & RANSFORD 43, Bloomsbury Square**
**London WC1A 2RA (GB)**

Courier Press, Leamington Spa, England.

**Description**

This invention relates to radiation curable acrylated polyurethanes.

Due to environmental concern and the high cost of solvents, commercial interest in radiation curable compositions is constantly increasing. Legislation which restricts the amount of solvents and other pollutants that can be vented to the atmosphere is one reason for this increased interest. Other reasons are the concerns expressed by unions and individuals over the possible toxic effects of prolonged exposure to volatile organic materials, and also the high cost of petroleum derived solvents. Generally, radiation curable systems are essentially 100% reactive systems, i.e., substantially all of the components react to produce the final product. Such systems can be cured by exposure to high energy ionizing radiation or to actinic radiation in the presence of photoinitiators.

Among the various radiation curable compositions disclosed in the prior art are polyurethane oligomers which have terminal acrylyl or methacrylyl groups. These are generally produced by the reaction of one or more organic polyisocyanates with one or more organic polyols wherein at least a portion of the polyisocyanate or polyol reactant has, in addition to its isocyanate or hydroxyl functionality, acrylyl or methacrylyl groups. Such radiation curable polyurethane oligomers can be made by reacting a stoichiometric excess of a polyisocyanate with a polyol and then reacting the remaining isocyanate groups with a hydroxyalkyl acrylate or methacrylate. U.S. Patent No. 3,700,643 discloses radiation curable oligomers made by reacting a polycaprolactone diol with an organic diisocyanate in a mole ratio of one to two followed by reaction with hydroxyethyl acrylate. U.S. Patent No. 3,782,961 discloses the reaction of a hydroxy compound having at least 5 ether linkages and a terminal acrylate or methacrylate group with a polyisocyanate.

U.S. Patent No. 4,133,723 discloses radiation curable compositions made by reacting a polyalkylene polyol having from 2 to 6 hydroxyl groups with a molar excess of a diisocyanate followed by reaction with a hydroxyalkyl acrylate or methacrylate.

U.S. Patents Nos. 4,057,431 and 4,139,436 describe photo-polymerizable compositions made by reacting a polyether polyol having 2 or 3 hydroxyl groups with an organic polyisocyanate and a hydroxyalkyl methacrylate. The reaction can be conducted in a diluent such as a polyethylene polyol acrylate or methacrylate.

Low viscosity radiation curable compositions are described in U.S. Patent No. 4,131,602. Such compositions are made by reacting an organic diisocyanate with a combination of organic tri/tetraol and organic diol followed by reacting a hydroxyalkyl acrylate. The combination of polyols is either a polyester tri/tetraol-polyether diol or a polyether tri/tetraol-polyester diol.

Additional patents which disclose radiation curable polyurethane oligomers are U.S. Patents Nos. 3,929,929; 4,089,763; 4,174,307, 4,309,526 and 4,312,798.

GB—A—1,373,182 (which corresponds to DE—A—2,312,973) discloses an article of a polymeric material formed by reacting and shaping a mixture comprising from 2% to 98% by weight of the precursors of a cross-linked polyurethane and from 98% to 2% by weight of at least one polymerizable ethylenically unsaturated material, the polyurethane precursors being reacted substantially to completion in solution in the ethylenically unsaturated material before polymerization of the ethylenically unsaturated material has proceeded to the extent that a separate phase is formed, the ethylenically unsaturated material subsequently being polymerized, characterised in that the precursors are capable of reacting together in the absence of the ethylenically unsaturated material to form a cross-linked polyurethane and comprise at least one polyfunctional compound containing at least two isocyanate-reactive groups, at least one polyisocyanate, and at least one monofunctional compound containing one group reactive with the polyisocyanate and/or with the polyfunctional compound, at least one of the precursors containing at least one polymerisable ethylenically unsaturated group, the ethylenically unsaturated material, at least during reaction of the polyurethane precursors, being substantially free of groups other than ethylenically unsaturated groups, which are reactive with the precursors, and in that the ratio of the number of equivalents of branch points in the precursors to the moles of monofunctional compound is in the range 1:5 to 5:1, and in the precursors there being one equivalent of ethylenic unsaturation for every 2,000 to 40,000 grams of the precursors.

Constant efforts are being made to improve the properties of radiation curable compositions. In the radiation curable coatings area, there is a need for compositions which have enhanced cure response, and, after being cured, improved abrasion resistance and improved tensile strength.

This invention is directed to radiation curable acrylated polyurethane oligomers having improved properties.

The present invention provides a radiation curable composition which comprises acrylated polyurethane oligomers which are a blend of (1) the reaction product of

(a) an organic diisocyanate,
(b) a polyether diol and
(c) a hydroxyalkyl acrylate or methacrylate and (2) the reaction product of
(d) an organic diisocyanate,
(e) a polyether triol and
(f) a hydroxyalkyl acrylate or methacrylate, wherein the organic diisocyanate, (a) and (d), is an aliphatic or cycloaliphatic diisocyanate; wherein the polyether diol, (b), is a dihydroxy terminated polyalkylene oxide which contains 2 or 3 carbon atoms in each alkylene group and which has a molecular weight of 800 to 1500; wherein the polyether triol, (e), is a trihydroxy terminated polyalkylene oxide which contains 2 or 3 carbon atoms in each alkylene group and which has a molecular weight of 300 to 750; wherein the alkyl group of the hydroxyalkyl acrylate or methacrylate contains 2 or 3 carbon atoms; wherein (b) and (e) are in such molar ratios that the resultant composition has an average acrylate or methacrylate functionality of 2.4 to 2.6; wherein 1 mole of diisocyanate is reacted per hydroxyl group of the polyether diol and triol; and wherein 1 mole of hydroxyalkyl acrylate or methacrylate is reacted per mole of diisocyanate.

Surprisingly, this invention makes it possible to produce acrylated polyurethane oligomers which have enhanced cure response and which, after being cured, have improved abrasion resistance and improved tensile strength.

The invention also provides a method of producing the radiation curable composition which comprises forming a blend of the specified reaction products wherein the stated reactants are in the specified proportions and the average acrylate or methacrylate functionality is in the stated range.

It also provides cured compositions made by means of radiation acting on the uncured compositions.

It also provides articles which comprise a substrate bearing a coating of the cured composition. The article may be coated with the uncured compositions, which is then cured.

The radiation curable compositions of this invention can be made by separately preparing each reaction product, i.e., the reaction product based on the polyether diol and the reaction product based on the polyether triol, and then blending the two products. The radiation curable composition can also be prepared by simultaneous formation of the products in situ, by preblending the polyether diol and the polyether triol in a molar ratio of 0.9:1 to 1.1:1 and then reacting this blend with the diisocyanate and the hydroxyalkyl acrylate or methacrylate.

The diisocyanates useful in this invention are organic aliphatic or cycloaliphatic diisocyanates which contain two iso-cyanate groups per molecule and no other groups which are reactive with hydroxyl groups. Examples of such diisocyanates are 1,6 - hexa - methylene diisocyanate, 1,4 - Hexamethylene diisocyanate, 2,2,4 - tri - methyl - hexamethylene diisocyanate, 2,4,4 - trimethyl - hexamethylene diisocyanate, 4,4' - methylene - bis(cyclohexylisocyanate), isophorone diisocyanate and 1 - methyl - 2,4 - diisocyanocyclohexane. The preferred diisocyanates are 4,4' - methylene - bis (cyclohexyliso - cyanate), isophorone diisocyanate and mixtures thereof.

The polyether diols useful in this invention are dihydroxy terminated polyalkylene oxides having 2 or 3 carbon atoms in each alkylene group. Such polyether diols may be made by polymerizing ethylene oxide, or propylene oxide, or mixtures thereof to form block copolymers, with a dihydric initiator. Such initiators include ethylene glycol, diethylene glycol, 1,2-propylene glycol, and 1,4-butanediol. Useful polyether diols have molecular weights of 800 to 1500. A most preferred polyether diol has a molecular weight of approximately 1000.

The polyether triols useful in this invention are trihydroxy terminated polyalkylene oxides having 2 or 3 carbon atoms in each alkylene group. Such polyether triols are made by polymerizing ethylene oxide, or propylene oxide, or mixtures thereof to form block copolymers, with a trihydric initiator. Such initiators include trimethylol ethane, trimethylol propane, glycerol and 1,2,4-butanetriol. Useful polyether triols have molecular weights of 300 to 750. A most preferred polyether diol has a molecular weight of approximately 400.

The hydroxyalkyl acrylates or methacrylates useful in this invention contain one radiation polymerizable double bond and one aliphatic hydroxyl group. The alkyl group contains 2 or 3 carbon atoms. Such hydroxyalkyl acrylates or methacrylates are hydroxyethyl acrylate, hydroxypropyl acrylate, hydroxyethyl methacrylate and hydroxypropyl methacrylate.

In preparing the compositions of this invention, the components are reacted in such proportions that the equivalents of isocyanate groups are equal to the total hydroxyl groups in the polyols and the hydroxyalkyl acrylate or methacrylate. Specifically, one mole of diisocyanate is reacted for each hydroxyl group of the polyol and one mole of hydroxyalkyl acrylate or methacrylate is reacted for each mole of diisocyanate. The polyether diol and the polyether triol are used in the molar ratios of 0.9:1 to 1.1:1. The use of these ratios results in an average acrylate or methacrylate functionality of 2.4 to 2.6. The preferred molar ratio of diol to triol is 1:1, with the average functionality being 2.5.

In preparing the compositions of this invention, the reaction product of the diol and the reaction product of the triol can be made separately, followed by blending of the finished products. In an alternate procedure, the diol and triol can be blended together followed by reaction with the diisocyanate and the hydroxyalkyl acrylate or methacrylate.

The components can be reacted in any order. For instance, all of the components, the diisocyanate, the polyols and the hydroxyalkyl ester can be added together and reacted. The reaction can be conducted stepwise by reacting with the hydroxyalkyl ester. Preferably, the hydroxyalkyl ester is reacted with the diisocyanate followed by reaction with the polyol.

The reaction conditions forming the acrylated polyurethane oligomers are reactions well known to those skilled in the art. Generally, the reactions are carried out at a temperature of 30°C. to 120°C., preferably 80°C to 105°C.

A urethane formation catalyst can be used in these reactions. Such catalysts include dibutyltin dilaurate, dioctyltin diacetate, dibutyltin oxide, stannous oleate, stannous tallate, pead octoate, triethylamine, morpholine and piperazine.

In order to prevent polymerization of the acrylate or methacrylate groups during the reaction, an inhibitor can be added. Such inhibitors include hydroquinone, methyl ether hydroquinone and phenothiazine.

The reaction can be conducted in a solvent or, preferably, in the absence of a solvent. If a solvent is used it can be a chemically insert solvent, such as xylene, toluene or 2-ethoxy-ethyl acetate. However, if a chemically inert solvent is used, it must be removed from the reaction product when the reaction is completed in order to be able to formulate a 100% reactive curable composition. If a solvent is used, the preferred solvents are reactive solvents, i.e., solvents which contain double bonds which are polymerizable by radiation. Examples of such solvents include alkyl acrylates or methacrylates having up to 12 carbon atoms in the alkyl group such as ethyl acrylate, butyl acrylate, 2-ethylhexyl acrylate, lauryl acrylate, methyl methacrylate or octyl methacrylate. Other reactive solvents are alkoxyalkyl acrylates or methacrylates, such as methoxybutyl acrylate, ethoxyethoxyethyl acrylate, ethoxypropyl acrylate or ethoxyethyl methacrylate. Additional reactive solvents include allyl acrylate, phenoxyethyl acrylate, cyclohexyl acrylate, acrylonitrile, cyanoethyl acrylate, 1,6-hexanediol diacrylate, trimethylolpropane triacrylate, acrylated fatty alcohols and acrylated aliphatic diglycidyl ethers. The amount of solvent used is such that the finished product has the desired application viscosity. Generally, the amount of solvent will vary from 0 to 50 weight percent based on the total weight of oligomer and solvent, and, preferably, 10 to 20 weight percent.

The radiation curable compositions of this invention can be cured by any of the known actinic radiation curing methods. The radiation can be ionizing radiation (either particulate or non-particulate) or non-ionizing radiation. As a suitable source of particulate radiation, one can use any source which emits electrons or charged nucleii. Particulate radiation can be generated from electron accelerators such as the Vander Graff accelerator, resonance transformers, linear accelerators, insulating core transformers, radioactive elements such as cobalt 60, strontium 90, etc. As a suitable source of non-particulate ionizing radiation, any source which emits radiation in the range of from $10^{-3}$ angstroms (100 fm) to 2000 angstroms (200 nm) can be used. Suitable sources include vacuum ultraviolet lamps, such as xenon or krypton arcs. As a suitable source of non-ionizing radiation, any source which emits radiation from 2000 angstroms (200 nm) to 4000 angstroms (400 nm) can be used. Suitable sources include mercury arcs, carbon arcs, tungsten filament lamps, sunlamps and lasers. All of these devices and sources are well known in the art and those skilled in radiation technology are fully aware of the manner in which radiation is generated and the precautions to be taken in its use.

When the radiation curable coating compositions are to be cured by exposure to non-ionizing radiation, e.g. ultraviolet radiation, photoinitiators may be added to the composition. Suitable photoinitiators, which are well known in the art, include 2,2 - diethoxy - acetophenone, 2,3, or 4 - bromo - acetophenone, benzaldehyde, benzoin, benzophenone, 9,10 - dibromoanthracene, 4,4' - dichlorobenzophenone, 2,3 - pentanedione, hydroxycyclohexylphenyl ketone and xanthone. Such photoinitiators are generally added in amounts up to 10 weight percent based on the weight of the total curable composition, and, preferably, 1 to 5 weight percent.

Photoactivators can also be used in combination with the photoinitiators. Examples of such photoactivators are methylamine, tributylamine, n-methyldiethanolamine, 2-aminoethylethanolamine, cyclohexylamine, diphenylamine and tribenzylamine.

The radiation curable compositions of this invention are preferably used as coating compositions. The coatings can be applied by conventional means, including spraying, curtain coating, dip padding, roll coating and brushing procedures. The coatings can be applied to any acceptable substrate, such as wood, metal, glass, fabric, paper, fiber and plastic.

The acrylated polyurethane oligomers can be used with no dilution or can be diluted with active solvents in order to adjust the viscosities of the system for coating applications. Suitable reactive solvents include those mentioned above. Examples of additional reactive solvents are hydroxyethyl acrylate, hydroxypropyl acrylate, hydroxyethyl methacrylate and hydroxypropyl methacrylate.

Additional additives which may be used include wetting agents, fillers, defoamers, dyes and pigments, the uses of which are well known in the art.

The following Examples illustrate the invention in more detail. Parts and percentages unless otherwise designated are parts and percentages by weight.

Example 1

To a suitable reactor were added 528 parts of 4,4' - methylene - bis(cyclohexylisocyanate), 0.87 part of dibutyltin dilaurate and 0.15 part of phenothiazine. Hydroxyethyl acrylate, 220 parts, was then added over a 2 hour period. During the first hour and 20 minutes of the addition period, the temperature rose to 123°F (51°C) due to the exothermic reaction. Heat was then applied raising the temperature to 154°F (68°C). Ten minutes after all the hydroxyethyl acrylate had been added, the addition of 1000 parts of polyoxyethylene glycol having an average molecular weight of 1000 was begun and continued over a 2 hour period with the temperature rising to 190°F (88°C). Heating at 190°—210°F (88—99°C) was continued over a 3 hour period.

The resulting product had a viscosity of 10,125 cps (10.125 Pa.s) at 150°F (66°C), No. 28 Brookfield spindle at 20 RPM, a solids content of 98.9%, a free NCO content of 0.02% and an average functionality of two acrylic groups per molecule.

## Example 2

To a suitable reactor were added 528 parts of 4,4' - methylene - bis(cyclohexylisocyanate), 0.52 part of dibutyltin dilaurate and 0.2 part of phenothiazine. Hydroxyethyl acrylate, 232 parts, was added over a 2 hour period with the temperature rising to 136°F (58°C). Heat was then applied raising the temperature to 150°F (66°C). A polyoxypropylene triol based on trimethylolpropane having an average molecular weight of 440, 282 parts, was then added over a one hour period with the temperature rising to 175°F (79°C). The temperature was then raised to 195°F (91°C) and was held at 195°F (91°C) to 198°F (92°C) for 3 hours. After this heating period the NCO content was 0.97%. After additional heating at 200°F (93°C) for about 8 hours, the NCO content was reduced to 0.03%.

The resulting product had a viscosity of 112,400 cps (112.4 Pa.s) at 200°F (93°C), a No. 28 Brookfield spindle at 2.5 RPM, a solids content of 95.8% and an average functionality of three acrylic groups per molecule.

## Example 3

To a suitable reactor were added 449 parts of isophorone diisocyanate, 0.5 part of dibutyltin dilaurate and 0.3 part of phenothiazine. Hydroxypropyl acrylate, 263 parts, was then added over a 2 hour period with the temperature rising to 128°F (53°C). Heat was then applied raising the temperature to 155°F (68°C). A polyoxypropylene triol based on trimethylolpropane having an average molecular weight of 440, 286 parts, was added over a one hour period with the temperature rising to 190°F (88°C). Heating at 195—200°F (91—93°C) was continued for 7 hours and 15 minutes.

The resulting product had a viscosity of 19,250 cps (19.25 Pa.s) at 200°F (93°C), a No. 28 Brookfield at 10 RPM, a solids content of 100%, an NCO content of 0.2% and an average functionality of three acrylic groups per molecule.

## Example 4

To a suitable reactor were added 568 parts of 4,4' - methylene - bis(cyclohexylisocyanate), 477 parts of isophorone diisocyanate, 1.4 parts of dibutyltin dilaurate and 0.84 part of phenotriazine. Hydroxypropyl acrylate, 559 parts, was then added over a 2 hour period with the temperature rising to 157°F (69°C). After one hour heating at 146—155°F (63—68°C), addition of a mixture of 831 parts of the polyoxyethylene glycol having a molecular weight of 1000 and 364 parts of a polyoxypropylene triol based on trimethylolpropane having an average molecular weight of 440 was begun and continued for 2 hours with the temperature rising to 206°F (97°C). After about 8 hours heating at 200°F (93°C) the NCO content was 0.05%.

The resulting product had a viscosity of 3,890 cps (3.89 Pa.s) at 200°F (93°C), a No. 28 Brookfield spindle at 50 RPM, a solids content of 100% and an average acrylic functionality of 2.5 acrylic groups per molecule.

## Example 5

Using the same procedure described in the preceding examples, 987 parts of isophorone diisocyanate were reacted with 578 parts of hydroxypropyl acrylate followed by reaction with a mixture of 859 parts of the polyoxyethylene glycol, average molecular weight 1000, and 376 parts of the polyoxypropylene triol based on trimethylolpropane, average molecular weight 440.

The resulting product has a viscosity of 2,195 cps (2.195 Pa.s) at 200°F (93°C), a No. 28 Brookfield spindle at 100 RPM, a solids content of 100%, an NCO content of 0.09% and an average functionality of 2.5 acrylic groups per molecule.

## Example 6

Using the same procedure described in the preceding examples, 1100 parts of 4,4' - methylene - bis(cyclohexylisocyanate) were reacted with 542 parts of hydroxypropyl acrylate followed by reaction with a mixture of 805 parts of the polyoxyethylene diol, average molecular weight 1000, and 353 parts of the polyoxypropylene triol based on trimethylolpropane, average molecular weight 440.

The resulting product had a viscosity of 6,950 cps (6.95 Pa.s) at 200°F (93°C), a No. 28 Brookfield spindle at 50 RPM, a solids content of 100%, an NCO content of 0.04% and an average functionality of 2.5 acrylic groups per molecule.

## Example 7

To a suitable reactor were added 1100 parts of 4,4' - methylene - bis(cyclohexylisocyanate), 1.4 parts of dibutyltin dilaurate and 0.84 part of phenothiazine. After thorough mixing, 311 parts of ethoxyethoxyethyl acrylate were added. The temperature was adjusted to 75°F (24°C) and addition of hydroxypropylacrylate, 542 parts, was begun. The addition was completed after 2 hours with the temperature rising to 148°F (64°C). After holding at a temperature of 148°—150°F (64—66°C) for 1 hour, the addition of a mixture of 805 parts of polyoxyethylene glycol, average molecular weight 1000, and 353 parts of polyoxypropylene triol based on trimethylolpropane, average molecular weight 440, was begun. This addition was completed in 1 hour and 2 minutes with the temperature rising to 190°F (88°C). Heating at 190°—202°F (88—94°C) was continued over 7.5 hours.

The resulting product had a viscosity of 8,080 cps (8.08 Pa.s) at 150°F (66°C), a No. 28 Brookfield spindle at 20 RPM, an NCO content of 0.13% and an average acrylate functionality based on the diol and triol of 2.5 acrylic groups per molecule.

Example 8

A radiation curable composition was made by mixing together 55.6 parts of the product of Example 7, 30 parts of trimethylolpropane triacrylate, 14.4 parts of N-vinyl pyrrolidone and 2 parts of hydroxycyclohexylphenyl ketone (Irgacure (trade mark) 184 obtained from Ciba-Geigy Corporation, Additives Dept.). Films were prepared on filled particle board at 0.5 mil (12.7 µm) thickness and were cured at a line speed of 50 feet (15.2 metres) per minute with a Fusion Ultraviolet Curing Unit, Model F-440, Fusion Systems Corporation, Rockville, Maryland with two 300 watt per linear inch (per 2.54 cm) mercury vapor lamps. The films after being cured exhibited 100% adhesion to the substrate, had a methylethyl ketone (MEK) resistance of greater than 200 double rubs, a pencil hardness of 8H and Taber abrasion resistance of 1.25 mg, weight loss.

Adhesion of the cured coatings to the substrate was determined as follows: the coatings were cross-hatched with scratch lines so as to form 100 squares. The cross-hatched area was covered with 3M company 610 Scotch Cellophane tape and even pressure was applied to the tape so that it would adhere evenly to the coating. The tape was then pulled from the coating and the % adhesion was determined by counting the squares which were removed by the tape.

Taber abrasion resistance was determined on a Taber Abraser, Model E-4010, using CS-17 wheels with a 1000 gram load. The abrasion resistance is reported as the milligram of coating lost during the abrasion test after 1000 cycles.

Example 9

A number of radiation curable compositions were prepared by blending the various components as listed in the following table:

| Component | Example | | | | | | | | | | | |
|---|---|---|---|---|---|---|---|---|---|---|---|---|
| | 9A | 9B | 9C | 9D | 9E | 9F | 9G | 9H | 9I | 9J | 9K | 9L |
| Example 1 | 45 | | | | | 22.5 | 18 | 13.5 | 9 | 27 | 31.5 | 36 |
| Example 2 | | 45 | | | | 22.5 | 27 | 31.5 | 36 | 18 | 13.5 | 9 |
| Example 7 | | | 50 | | | | | | | | | |
| Ebecryl (trade mark) 264* | | | | 50 | 50 | | | | | | | |
| EOEOEA** | 5 | 5 | | | 5 | 5 | 5 | 5 | 5 | 5 | 5 | 5 |
| NVP*** | 20 | 20 | 20 | 20 | 20 | 20 | 20 | 20 | 20 | 20 | 20 | 20 |
| TMPTA**** | 30 | 30 | 30 | 30 | 25 | 30 | 30 | 30 | 30 | 30 | 30 | 30 |
| Irgacure (trade mark) 187 | 2 | 2 | 2 | 2 | 2 | 2 | 2 | 2 | 2 | 2 | 2 | 2 |

* Aliphatic urethane acrylate obtained from UCB, Societe Anonyme, Belgium
** Ethoxyethoxyethyl acrylate
*** N-Vinyl pyrrolidone
**** Trimethylolpropane triacrylate

Coatings were prepared on filled particle board at 0.5 mil (0.0127 mm) thickness and were cured in the curing unit described in Example 8. Cure speed is reported as feet or metres per minute per double lamp (F/M/dl) and is the maximum speed at which a tack-free film is obtained. Abrasion resistance is reported as milligrams of film lost using the test method described in Example 8. Acrylate functionality is the average functionality per molecule.

| Example | Cure speed F/M/dl | Abrasion resistance mg.wt.loss | Acrylate functionality |
|---------|-------------------|-------------------------------|------------------------|
| 9A | 50 (15.2) | 43.5 | 2 |
| 9B | 75 (22.9) | 27.8 | 3 |
| 9C | 125 (38.1) | 12.4 | 2.5 |
| 9D | 12.5 (3.8) | 23.2 | 3 |
| 9E | 12.5 (3.8) | 24.3 | 3 |
| 9F | 100 (30.5) | 14.3 | 2.5 |
| 9G | 100 (30.5) | 21.9 | 2.6 |
| 9H | 100 (30.5) | 23.1 | 2.7 |
| 9I | 100 (30.5) | 26.6 | 2.8 |
| 9J | 100 (30.5) | 25.1 | 2.4 |
| 9K | 100 (30.5) | 29.7 | 2.3 |
| 9L | 100 (30.5) | 31.0 | 2.2 |

As can be seen from the abrasion resistance results listed above, the minimum weight loss was obtained when the acrylate functionality per molecule was 2.5.

Example 10

Radiation curable coatings were prepared by blending various components in the proportions listed in the following table. Coatings were prepared on filled particle board and were cured and tested using the procedures described in the Examples 8 and 9.

| | Examples | | |
|---|---|---|---|
| Components | 10A | 10B | 10C |
| Example 6 | 50 | | |
| Example 5 | | 50 | |
| Example 4 | | | 50 |
| TMPTA | 30 | 30 | 30 |
| NVP | 20 | 20 | 20 |
| Irgacure 184 | 2 | 2 | 2 |
| Properties Cure Speed F/M/dl | 60 (18.3) | 60 (18.3) | 60 (18.3) |
| Abrasion Resistance mg.wt.loss | 13.7 | 19.3 | 19.2 |
| Acrylate Functionality | 2.5 | 2.5 | 2.5 |

Example 11

Radiation curable coating compositions were prepared by blending the acrylated urethane of Example 7 with trimethylpropane triacrylate, the dimethacrylate of polyethylene glycol (M.W. 600) (DAPEG), n-vinyl pyrrolidone and Irgacure 184 in the following proportions:

7

|  | Example | |
| Components | 11A | ·11B |
| --- | --- | --- |
| Example 7 | 50 | 50 |
| TMPTA | 30 | 30 |
| DAPEG | 20 | 10 |
| NVP |  | 10 |
| Irgacure 184 | 2 | 2 |

Coatings were prepared on filled particle board and were cured as described in Example 9. The abrasion resistance for 11A was 33.9 mg.weight loss and for 11B it was 41.0 mg. weight loss.

Example 12

Radiation curable coatings were prepared by blending various components in the proportions listed below. Coatings were prepared on filled particle board and were cured and tested using the procedures described in Examples 8 and 9.

|  | Examples | | |
| Components | 11A | 11B | 11C |
| --- | --- | --- | --- |
| Example 3 | 15 | 25 | 50 |
| Example 1 | 85 | 75 | 50 |
| TMPTA | 30 | 30 | 30 |
| NVP | 20 | 20 | 20 |
| Irgacure 184 | 2 | 2 | 2 |
| Properties Abrasion resistance mg.wt.loss | 20.3 | 29.7 | 16.8 |
| Acrylate Functionality | 2.15 | 2.25 | 2.5 |

Example 13

Radiation curable coatings were prepared by blending a trifunctional acrylic urethane based on an aliphatic diisocyanate, Example 3 product, with a difunctional acrylic urethane based on an aromatic diisocyanate. This difunctional acrylic urethane, identified below as TDI, was made using the procedure described in Example 1 wherein toluene diisocyanate was substituted on an equivalent basis for 4,4'-methylene-bis(cyclohexylisocyanate).

|  | Examples | | |
| Components | 13A | 13B | 13C |
| --- | --- | --- | --- |
| Example 3 | 50 | 25 | 15 |
| TDI | 50 | 75 | 85 |
| TMPTA | 30 | 30 | 30 |
| NVP | 20 | 20 | 20 |
| Irgacure 184 | 2 | 2 | 2 |
| Properties Abrasion resistance mg.wt.loss | 42.2 | 51.1 | 66.2 |
| Acrylate Functionality | 2.5 | 2.25 | 2.15 |

8

In this example, the best abrasion resistance is found with the blend having an acrylate functionality of 2.5 as was shown in the preceding examples. However, if the results of this example are compared with those of Example 12, it can be seen that much better abrasion resistance is obtained when all of the isocyanate in the urethane is aliphatic rather than aromatic.

Example 14

Using the procedure described in Example 7, an acrylated urethane having an average acrylate functionality of 2.5 was prepared using a triol based on a polyester rather than a polyether. This triol was NIAX PCP 0310, Polycaprolactone supplied by Union Carbide. This acrylate urethane was formulated into a radiation curable coating and was compared with the product of Example 7 formulated in the same manner.

| | Examples | |
| Components | 14A | 14B |
| --- | --- | --- |
| Example 7 | 50 | |
| Example 14 | | 50 |
| TMPTA | 30 | 30 |
| NVP | 20 | 20 |
| Irgacure 184 | 3 | 3 |
| Properties | | |
| Cure Speed, F/M/dl | 125 (38.1) | 60 (18.3) |
| Adhesion to Oak Board | 100% | 98% |
| Adhesion to Panel Board | 100% | 100% |
| MEK Resistance, Double Rubs | 200 | 200 |
| Abrasion Resistance, mg.wt.loss | 11.4 | 15.3 |

Example 15

A number of acrylated urethanes were formulated and cured using the procedure described in Example 8. The tensile strength and elongation of the cured compositions were determined with a Universal Testing Unit, Instron Corporation, Canton, Massachusetts, operating at 50% per minute strain rate (1 inch (2.54 cm) per minute with an initial gap separation of 2 inches (5.08 cm).

| Composition | Tensile strength psi (mbar) | Elongation % |
| --- | --- | --- |
| Example 7 | 2800 (193053) | 22 |
| Example 1 | 385 (26545) | 33 |
| CMD 6700 (trade mark)[1] | 617 (42541) | 36 |
| Uvithane (trade mark) 893[2] | 399 (27510) | 22.6 |
| Uvithane 783[3] | 472 (32543) | 28 |
| Uvithane 782[4] | 40 (2758) | 65 |
| Ebecryl 264[5] | 2430 (167543) | 35 |

[1] Aromatic Urethane Acrylate supplied by Celanese Specialty Resins, a Division of Celanese Corporation
[2] Aliphatic Urethane Acrylate supplied by Thiokol Specialty Chemicals Division
[3] Aromatic Urethane Acrylate supplied by Thiokol Specialty Chemicals Division
[4] Aromatic Urethane Acrylate supplied by Thiokol Specialty Chemicals Division
[5] Aliphatic Urethane Acrylate supplied by UCB, Societe Anonyme

# EP 0 168 173 B1

The principles, preferred embodiments and modes of operation of the present invention have been described in the foregoing specification. The invention which is intended to be protected herein, however, is defined by the appended claims which of course are limited to the particular forms disclosed, which are merely illustrative and not in any way restrictive. Variations and changes in the specific embodiments may be made by those skilled in the art without departing from the invention.

## Claims

1. A radiation curable composition which comprises acrylated polyurethane oligomers which are a blend of (1) the reaction product of
   (a) an organic diisocyanate,
   (b) a polyether diol and
   (c) a hydroxyalkyl acrylate or methacrylate
and (2) the reaction product of
   (d) an organic diisocyanate,
   (e) a polyether triol and
   (f) a hydroxyalkyl acrylate or methacrylate,
wherein the organic diisocyanate, (a) and (d), is an aliphatic or cycloaliphatic diisocyanate; wherein the polyether diol, (b), is a dihydroxy terminated polyalkylene oxide which contains 2 or 3 carbon atoms in each alkylene group and which has a molecular weight of 800 to 1500; wherein the polyether triol, (e), is a trihydroxy terminated polyalkylene oxide which contains 2 or 3 carbon atoms in each alkylene group and which has a molecular weight of 300 to 750; wherein the alkyl group of the hydroxyalkyl acrylate or methacrylate contains 2 or 3 carbon atoms; wherein (b) and (e) are in such molar ratios that the resultant composition has an average acrylate or methacrylate functionality of 2.4 to 2.6; wherein 1 mole of diisocyanate is reacted per hydroxyl group of the polyether diol and triol; and wherein 1 mole of hydroxyalkyl acrylate or methacrylate is reacted per mole of diisocyanate.

2. The composition of claim 1 wherein the average acrylate or methacrylate functionality is 2.5.

3. The composition of claim 1 or 2 wherein the diisocyanate is 4,4' - methylene - bis(cyclohexylisocyanate) or isophorone diisocyanate or a mixture thereof.

4. The composition of any of claims 1—3 wherein the polyether triol has a molecular weight of approximately 400 and the polyether diol has a molecular weight of approximately 1000.

5. The composition of claim 1 wherein the hydroxyalkyl acrylate is hydroxyethyl acrylate or hydroxypropyl acrylate.

6. A method of producing the radiation curable composition of any of claims 1 to 5 which comprises forming a blend of the specified reaction products wherein the stated reactants are in the specified proportions and the average acrylate or methacrylate functionality is in the stated range.

7. A method according to claim 6 wherein the said reaction products are each prepared separately and are subsequently blended.

8. The method of claim 6 wherein the polyether diol and the polyether triol are preblended in a molar ratio of 0.9:1 to 1.1:1 and the reactions of the diisocyanate and the hydroxyalkyl acrylate or methacrylate are conducted with the pre-blend.

9. The method in claim 8 wherein the polyether diol and the polyether triol are preblended in a molar ratio of 1:1.

10. Radiation-cured compositions produced by causing radiation to act on the composition of any of claims 1 to 5 or the composition produced by the method of any of claims 6 to 9.

11. An article comprising a substrate bearing a coating of a composition of claim 10.

## Patentansprüche

1. Unter der Einwirkung von Strahlung härtbare Zusammensetzung, umfassend acrylierte Polyurethan-Oligomere, die ein Gemisch sind aus (1) dem Reaktionsprodukt aus
   (a) einem organischen Diisocyanat,
   (b) einem Polyetherdiol und
   (c) einem Hydroxyalkylacrylat oder -methacrylat
und (2) dem Reaktionsprodukt aus
   (d) einem organischen Diisocyanat,
   (e) einem Polyethertriol und
   (f) einem Hydroxyalkylacrylat oder -methacrylat,
worin das organische Diisocyanat, (a) und (d), ein aliphatisches oder cycloaliphatisches Diisocyanat ist, worin das Polyetherdiol (b) ein dihydroxy-endständiges Polyalkylenoxid ist, das 2 oder 3 Kohlenstoff-Atome in jeder Alkylen-Gruppe enthält und das ein Molekulargewicht von 800 bis 1500 hat, worin das Polyethertriol (e) ein trihydroxy-endständiges Polyalkylenoxid ist, das 2 oder 3 Kohlenstoff-Atome in jeder Alkylen-Gruppe enthält und das ein Molekulargewicht von 300 bis 750 hat, worin die Alkyl-Gruppe des Hydroxyalkylacrylats oder -methacrylats 2 oder 3 Kohlenstoff-Atome enthält, worin (b) und (e) in solchen Stoffmengen-Verhältnissen ("Mol-Verhältnissen") vorliegen, daß die resultierende Zusammensetzung

10

eine mittlere Acrylat- oder Methacrylat-Funktionalität von 2,4 bis 2,6 hat, worin 1 mol Diisocyanat pro Hydroxyl-Gruppe des Polyetherdiols und -triols umgesetzt wird; und worin 1 mol Hydroxyalkylacrylat oder -methacrylat pro 1 mol Diisocyanat umgesetzt wird.

2. Zusammensetzung nach Anspruch 1, worin die mittlere Acrylat- oder Methacrylat-Funktionalität 2,5 ist.

3. Zusammensetzung nach Anspruch 1 oder 2, worin das Diisocyanat 4,4'-Methylen-bis(cyclohexylisocyanat) oder Isophorondiisocyanat oder ein Gemisch aus diesen ist.

4. Zusammensetzung nach irgendeinem der Ansprüche 1 bis 3, worin das Polyethertriol ein Molekulargewicht von etwa 400 hat und das Polyetherdiol ein Molekulargewicht von etwa 1000 hat.

5. Zusammensetzung nach Anspruch 1, worin das Hydroxyalkylacrylat Hydroxyethylacrylat oder Hydroxypropylacrylat ist.

6. Verfahren zur Herstellung einer unter der Einwirkung von Strahlung härtbaren Zusammensetzung nach irgendeinem der Ansprüche 1 bis 5, umfassend das Bilden eines Gemischs der bezeichneten Reaktionsprodukte, wobei die angegebenen Reaktions-Ausgangsstoffe in den bezeichneten Verhältnissen vorliegen und die mittlere Acrylat- oder Methacrylat-Funktionalität in dem angegebenen Bereich liegt.

7. Verfahren nach Anspruch 6, worin die genannten Reaktionsprodukte jeweils getrennt hergestellt werden und anschließend miteinander gemischt werden.

8. Verfahren nach Anspruch 6, worin das Polyetherdiol und das Polyethertriol in einem Stoffmengen-Verhältnis von 0,9:1 bis 1,1:1 vorher gemischt werden und die Reaktionen des Diisocyanats und des Hydroxyalkylacrylats oder -methacrylats mit der Vormischung durchgeführt werden.

9. Verfahren nach Anspruch 8, worin das Polyetherdiol und das Polyethertriol in einem Stoffmengen-Verhältnis von 1:1 vorher gemischt werden.

10. Unter der Einwirkung von Strahlung gehärtete Zusammensetzungen, dadurch hergestellt, daß Strahlung auf die Zusammensetzung irgendeines der Ansprüche 1 bis 5 oder die nach einem Verfahren irgendeines der Ansprüche 6 bis 9 hergestellte Zusammensetzung einwirken gelassen wird.

11. Gegenstand, umfassend ein Substrat, das einen Überzug aus einer Zusammensetzung nach Anspruch 10 trägt.

**Revendications**

1. Composition durcissable par rayonnement qui comprend des polyuréthanes oligomères acrylés qui sont un mélange de (1) le produit réactionnel de
    (a) un diisocyanate organique,
    (b) un polyéther diol et
    (c) un hydroxyalkyl acrylate ou méthacrylate
et (2) le produit réactionnel de
    (d) un diisocyanate organique,
    (e) un polyéther triol et
    (f) un hydroxyalkyl acrylate ou méthacrylate,
où le diisocyanate organique, (a) et (d), est un diisocyanate aliphatique ou cycloaliphatique; où le polyéther diol, (b), est un oxyde de polyalkylène terminé en dihydroxy qui contient 2 ou 3 atomes de carbone dans chaque groupe alkylène et qui a un poids moléculaire de 800 à 1500; où le polyéther triol, (e), est un oxyde de polyalkylène terminé en trihydroxy qui contient 2 ou 3 atomes de carbone dans chaque groupe alkylène et qui a un poids moléculaire de 300 à 750; où le groupe alkyle de l'hydroxyalkyl acrylate ou méthacrylate contient 2 ou 3 atomes de carbone; où (b) et (e) sont à des rapports molaires tels que la composition résultante ait une fonctionnalité moyenne d'acrylate ou de méthacrylate de 2,4 à 2,6; où on fait réagir 1 mole de diisocyanate par groupe hydroxyle du polyéther diol et triol; et où 1 mole d'hydroxyalkyl acrylate ou méthacrylate réagit par mole de diisocyanate.

2. Composition de la revendication 1 où la fonctionnalité moyenne d'acrylate ou méthacrylate est de 2,5.

3. Composition de la revendication 1 ou 2 où le diisocyanate est le 4,4'-méthylène-bis(cyclohexylisocyanate) ou le diisocyanate d'isophorone ou un mélange.

4. Composition selon l'une des revendications 1—3 où le polyéther triol a un poids moléculaire d'environ 400 et le polyéther diol a un poids moléculaire d'environ 1.000.

5. Composition selon la revendication 1 où l'hydroxyalkyl acrylate est l'hydroxyéthyl acrylate ou l'hydroxypropyl acrylate.

6. Méthode de production de la composition durcissable par rayonnement selon l'une des revendications 1 à 5 qui consiste à former un mélange des produits réactionnels spécifiés où les réactifs indiqués sont aux proportions spécifiées et la fonctionnalité moyenne d'acrylate ou de méthacrylate est dans le plage indiquée.

7. Méthode selon la revendication 6 où chacun desdits produits réactionnels est préparé séparément puis on les mélange subséquemment.

8. Méthode selon la revendication 6 où le polyéther diol et le polyéther triol sont prémélangés à un rapport molaire de 0,9:1 à 1:1 et les réactions du diisocyanate et de l'hydroxyalkyl acrylate ou méthacrylate sont entreprises avec le prémélange.

9. Méthode selon la revendication 8 où le polyéther diol et le polyéther triol sont prémélangés à un rapport molaire de 1:1.

10. Composition durcie par rayonnement produite en forçant un rayonnement à agir sur la composition selon l'une des revendications 1 à 5 ou la composition produite par la méthode selon l'une des revendications 6 à 9.

11. Article comprenant un substrat portant un revêtement d'une composition de la revendication 10.